# EUROPEAN PATENT APPLICATION

(11) **EP 1 100 210 A2**
(43) Date of publication of application: **16.05.2001**
(21) Application number: 00310006.2
(22) Date of filing: 10.11.2000
(51) Int. Cl.: H04B 1/707

(54) **Spread spectrum communication apparatus and method**

(30) Priority: 11.11.1999 JP 32101999
(71) Applicant: NEC CORPORATION, Tokyo (JP)
(72) Inventor: Ohnishi, Osamu, Minato-ku (JP)
(74) Representative: Moir, Michael Christopher

(57) **Abstract**

A spread spectrum communication apparatus and method reduces the memory capacity required for detecting timing and code sequences. The spread spectrum communication apparatus detects frame timing and a code sequence by using as input signals those signals output from an opposing apparatus that spreads a plurality of slots comprised by time-sharing frames according to spreading codes of spreading sequences. The apparatus includes: a plurality of despreading units that despread the slots of the input signals with predetermined spreading codes and output correlation values; a selection unit that selects at least one spreading code in order, starting with that having the largest correlation value for each slot based on the output of all despreading units, and outputs that spreading code and correlation value; a memory unit that stores the output of the selection unit corresponding to the slots; and, a judgment unit that infers the frame timing and code sequence based on the stored spreading code and correlation value.

## Description

### BACKGROUND OF THE INVENTION

### Field of the Invention

The present invention relates to a spread spectrum communication apparatus and method, which performs spreading and despreading using a plurality of spreading codes, and more particularly, to a spread spectrum communication apparatus and method that reduces circuit size to detect frame timing.

### Description of the Related Art

The spread spectrum communication method has attracted attention for its application to mobile communications due to its superior resistance to interference and jamming and its ability to realize high reception characteristics in multi-path environments. In addition, research and development activities are being conducted on mobile communications using the spread spectrum communication method that allow high-speed transmission referred to as W-CDMA.

According to ARIB specifications (Specifications of Air-Interface for 3G Mobile System 1.0 (1999.1)) (to be abbreviated as ARIB specifications), mobile units are stipulated to identify the timing and scrambling codes of signals transmitted from a base station by three stages of processing.

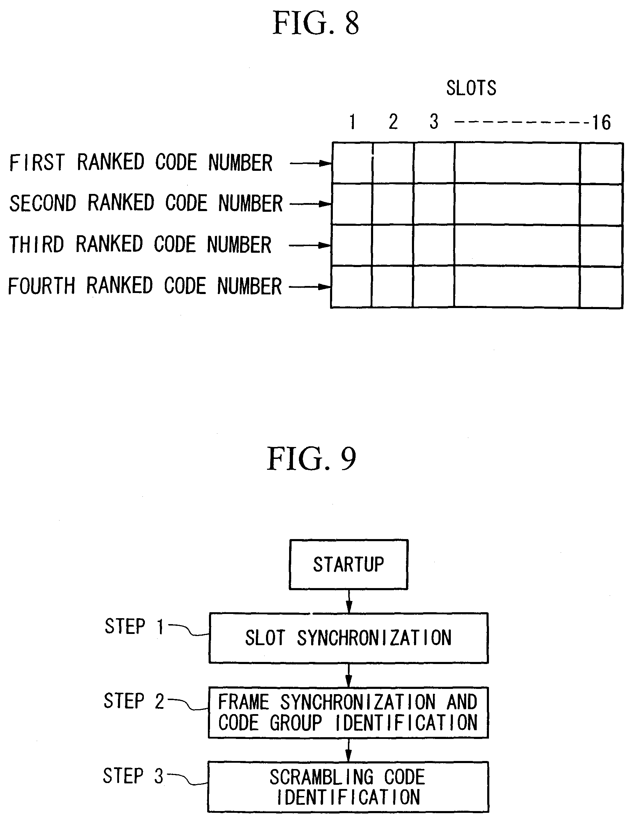

Fig. 9 is a schematic flow chart showing the three stages of processing of ARIB specifications. In Fig. 9, the mobile unit captures the slot timing in step 1, identifies the frame timing and scrambling code group in step 2, and identifies the scrambling code in step 3.

In the case of mobile communications according to the spread spectrum communication method, transmission is performed by spreading timing information or timing information and additional information using the method described below in step 2.

Spreading codes (to be referred to simply as codes), which belong to a spreading code sequence composed of a plurality of different spreading codes, compose a plurality of code groups in which they are respectively arranged in a predetermined sequence. In the transmitter, when frames divided among a plurality of slots are spread in a predetermined code group, each slot within the frame is spread and transmitted with its respectively corresponding code.

Fig. 10 is a schematic block diagram showing the processing means of step 2 of a spread spectrum communication apparatus derived from a technical report submitted by Higuchi et al. to the Institute Electronics, Information and Communication Engineers entitled, "3-step Fast Cell Search Method with Frequency Drift Compensation for W-CDMA" RCS99-65 (1999-07) (to be referred to as the technical report).

Fig. 11 is a memory block diagram showing the data configuration within the memory unit shown in Fig. 10.

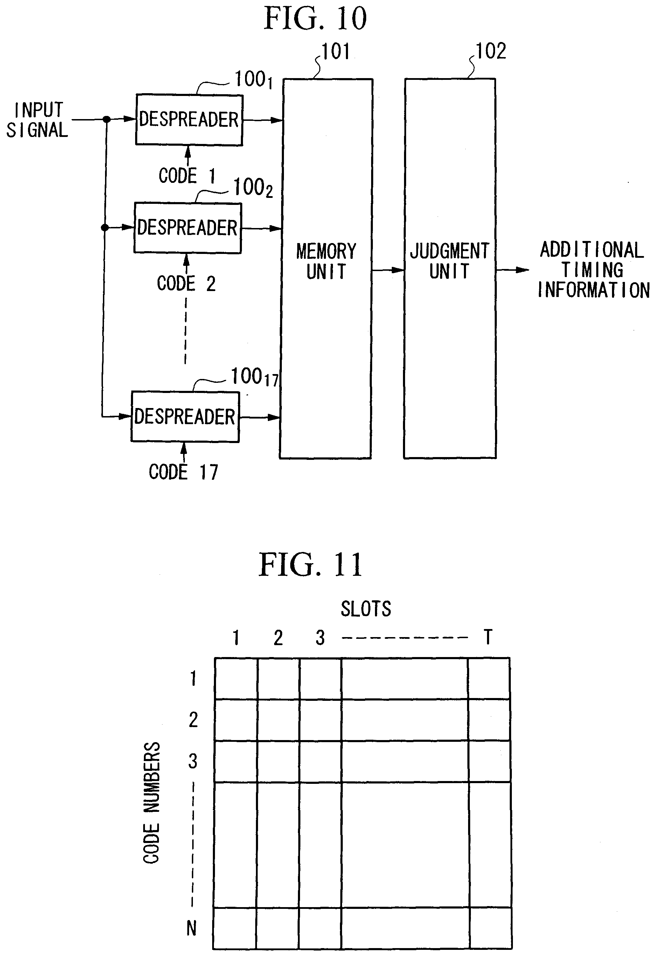

In Fig. 10, the spread spectrum communication apparatus is composed of correlators 100₁-100_{N}, which are provided to despread input signals with all predetermined spreading codes (codes 1-N), and which despread each slot signal according to respectively different codes, memory unit 101, which stores correlation values obtained with inverse diffusion for each slot corresponding to a code number, and judgment unit 102, which performs predetermined arithmetic operations based on the data stored in memory unit 101, and infers the most suitable code group among predetermined code groups and the transmission frame timing of the base station.

In Fig. 11, correlation values obtained by despreading with all codes are stored for all slots in memory unit 101. Judgment unit 102 performs cumulative addition processing of correlation values for all respective candidates for combinations of frame timing and code group, and then performs a maximum likelihood judgment for inferring the candidate frame timing and code group for which the addition result is the maximum as the frame timing and code group of the base station transmission.

### SUMMARY OF THE INVENTION

In a spread spectrum communication apparatus and method of the prior art as described above, correlation values with all codes had to be stored for each slot, requiring the memory unit to have a large capacity.

In order to solve the problems of the prior art as described above, the object of the preferred embodiments of the present invention is to provide a spread spectrum communication apparatus and method that reduces the required memory capacity.

In order to achieve the above object, the spread spectrum communication apparatus of the present invention detects frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence, and is comprised of:
a plurality of despreading units that despread said slots of said input signals with predetermined spreading codes and outputs correlation values;
a selection unit that selects at least one of said spreading codes in order starting with the largest of said correlation values for each of said slots based on the output of all of said despreading units, and outputs said spreading code and the correlation value corresponding to said spreading code;
a memory unit that stores the output of said selection unit corresponding to said slots; and,
a judgment unit that infers the frame timing and spreading sequence used for transmission based en said spreading code and said correlation value stored in said memory unit.

Furthermore, said judgment unit may also respectively compare the spreading code stored in said memory unit and the spreading code corresponding to the code sequence based on all possible frame timings for all said code sequences, determine the sum of said correlation values corresponding to those spreading codes found to be in agreement for each combination of frame timing and spreading sequence, and infer said combination having the largest of said sums to be the frame timing and code sequence used for transmission.

On the other hand, a spread spectrum communication apparatus having a different constitution of the present invention detects frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence, and is comprised of:
at least one despreading diffusion unit that despreads said slots of said input signals with predetermined spreading codes and outputs correlation values;
a selection unit that selects at least one of said spreading codes in order starting with the largest of said correlation values for each of said slots based on the output of all of said despreading units, and outputs said spreading code;
a memory unit that stores the output of said selection unit corresponding to said slots; and,
a judgment unit that infers the frame timing and spreading sequence used for transmission based on said spreading code stored in said memory unit.

Furthermore, said judgment unit may also respectively compare the spreading code stored in said memory unit and the spreading code corresponding to the code sequence based on all possible frame timings for all said code sequences, determine the sum of weighted values corresponding to those spreading codes found to be in agreement for each combination of frame timing and spreading sequence, and infer said combination having the largest of said sums to be the frame timing and code sequence used for transmission.

Thus, the amount of data to be stored in the memory unit is reduced.

In addition, the spread spectrum communication method of the present invention is for detecting frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence; wherein,
correlation values are determined by despreading the signals of all slots with all predetermined spreading codes,
at least one spreading code is selected in order starting with the largest of said correlation values for each slot,
said selected spreading code and said correlation value are respectively stored corresponding to the slots,
said stored spreading code and spreading code corresponding to said code sequence are respectively compared based on all possible frame timings for all code sequences,
the sum of said correlation values corresponding to those spreading codes found to be in agreement is determined by correlating with combinations of frame timing and code sequences, and
said combination for which said sum is the largest is inferred to be the frame timing and code sequence used for transmission.

On the other hand, a different spread spectrum communication method of the present invention is for detecting frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence; wherein,
correlation values are determined by despreading the signals of all slots with all predetermined diffusion codes,
at least one spreading code is selected in order starting with the largest of said correlation values for each slot,
said selected spreading code is respectively stored corresponding to the slots,
said stored spreading code and spreading code corresponding to said code sequence are respectively compared based on all possible frame timings for all code sequences,
the sum of predetermined weighted values corresponding to the order of those codes found to be in agreement is determined corresponding to combinations of frame timing and code sequences, and
said combination for which said sum is the largest is inferred to be the frame timing and code sequence used for transmission.

### BRIEF DESCRIPTION OF THE DRAWINGS

Preferred features of the present invention will now be described, by way of example only, with reference to the accompanying drawings, in which:-

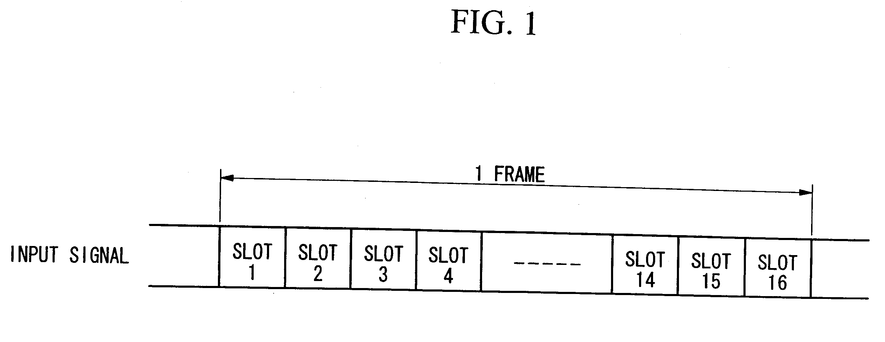

Fig. 1 is a schematic timing chart showing the frame composition of input signals of a spread spectrum communication apparatus according to ARIB specifications.

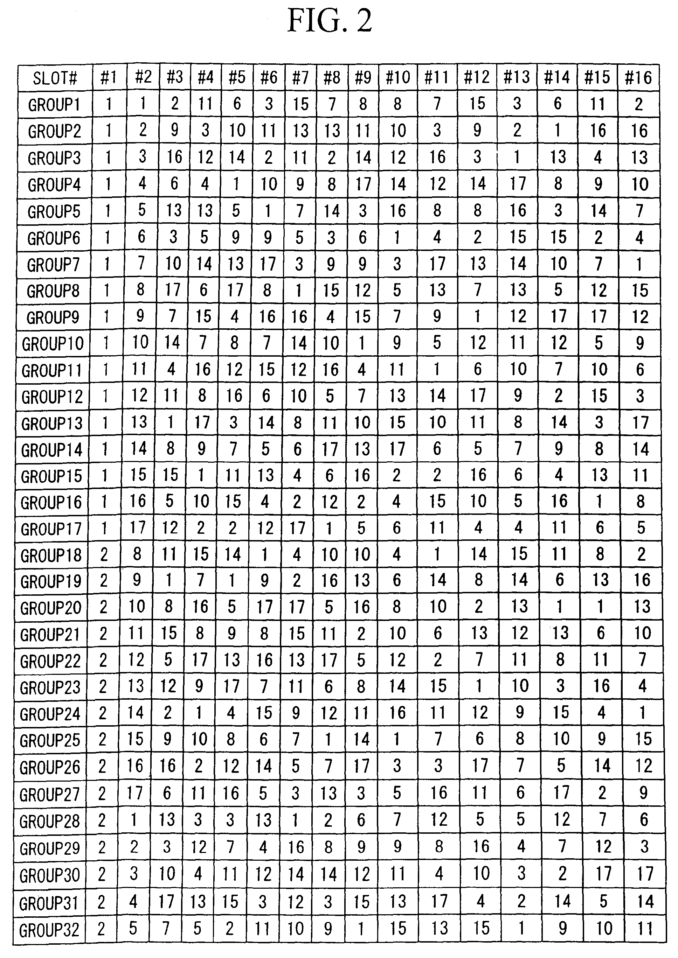

Fig. 2 is a table of codes showing codes corresponding to each slot of each code group.

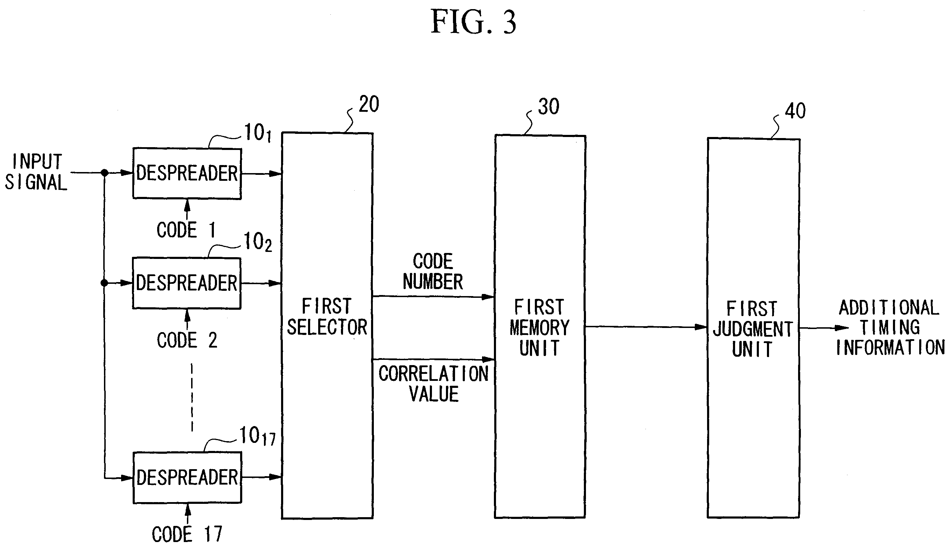

Fig. 3 is a schematic block diagram showing an example of the constitution of a spread spectrum communication apparatus according to ARIB specifications of a first embodiment that applies the present invention.

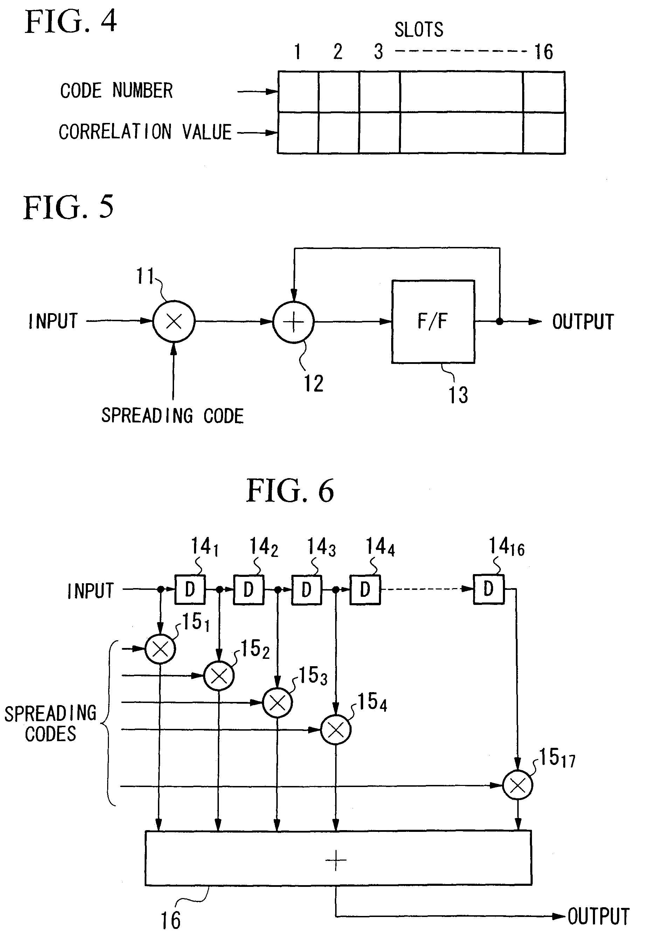

Fig. 4 is a data block diagram showing the data composition inside a first memory unit shown in Fig. 3.

Fig. 5 is a schematic block diagram showing the circuit configuration of a correlator applicable to a despreader.

Fig. 6 is a schematic block diagram showing the circuit configuration of a matched filter applicable to a despreader.

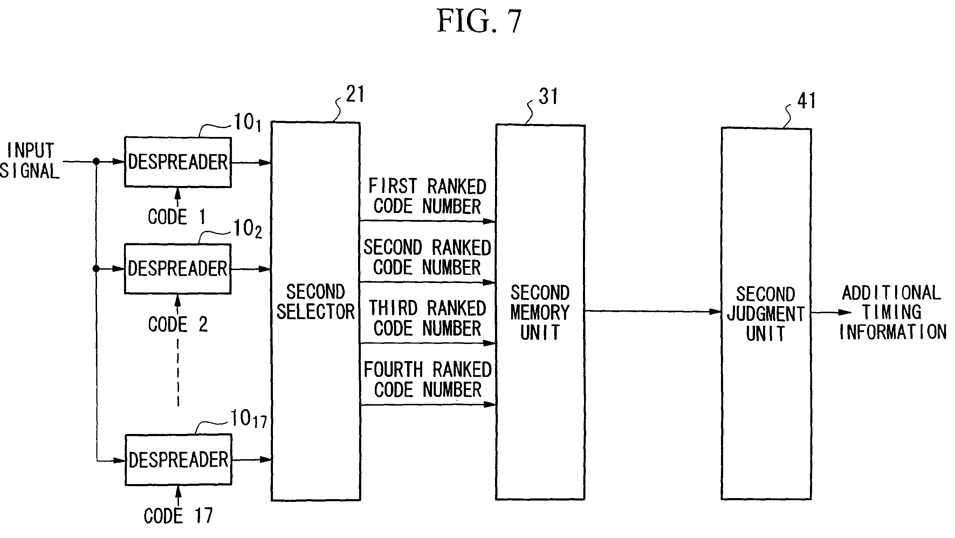

Fig. 7 is a schematic block diagram showing an example of the constitution of a spread spectrum communication apparatus according to ARIB specifications of a second embodiment that applies the present invention.

Fig. 8 is a memory block diagram showing the data composition inside a second memory unit shown in Fig. 7.

Fig. 9 is a schematic flow chart showing the three stages of processing of ARIB specifications.

Fig. 10 is a schematic block diagram showing the processing means of step 2 of a spread spectrum communication apparatus derived from a technical report submitted by Higuchi et al. to the Institute of Electronics, Information and Communication Engineers entitled, "3-step Fast Cell Search Method with Frequency Drift Compensation for W-CDMA" RCS99-65 (1999-07).

Fig. 11 is a memory block diagram showing the data composition inside the memory unit shown in Fig. 10.

### DETAILED DESCRIPTION OF THE PREFERRED EMBODIMENTS

The following provides a detailed explanation of embodiments when applying the present invention to a spread spectrum communication apparatus according to ARIB specifications with reference to the drawings.

Fig. 1 is a schematic timing chart showing the frame composition of input signals of a spread spectrum communication apparatus according to ARIB specifications.

Fig. 2 is a table of codes showing codes corresponding to each slot of each code group.

One frame is composed of T slots. In addition, each code group is composed of rows of T codes each in which N types of codes (SSC: Second Search Codes) are arranged in a predetermined sequence, and there are M code groups. According to ARIB specifications, T = 16, N = 17 and M = 32.

An opposing apparatus (such as a base station) of the spread spectrum communication apparatus of the present invention selects a single code sequence of the code sequences comprised of 16 spreading codes and combining 17 types of spreading codes, and respectively spreads and outputs 16 slots that compose a frame according to the spreading code corresponding to the slot of the selected code sequence.

The spread spectrum communication apparatus of the present invention (such as a mobile unit) detects frame timing and the above code sequence from the input signals.

### Embodiment 1

The following provides a detailed explanation of a first embodiment of the present invention using the drawings.

Fig. 3 is a schematic block diagram showing an example of the constitution of a spread spectrum communication apparatus according to ARIB specifications of a first embodiment that applies the present invention.

Fig. 4 is a data block diagram showing the data composition inside a first memory unit shown in Fig. 3.

Fig. 5 is a schematic block diagram showing the circuit configuration of a correlator applicable to a despreader.

Fig. 6 is a schematic block diagram showing the circuit configuration of a matched filter applicable to a despreader.

The spread spectrum communication apparatus in Fig. 3 is composed of despreaders 10₁-10₁₇ that are provided for despreading input signals with 17 predetermined types of codes, a first selector 20 that selects codes for which the correlation value with the input signals is the largest for each slot, and then outputs that code number and correlation value, a first memory unit 30 that stores code numbers input from first selector 20 and their corresponding correlation values, and a first judgment unit 40 that performs predetermined arithmetic operations based on data stored in first memory unit 30, and performs a maximum likelihood judgment for inferring the most suitable code group among the 32 predetermined types of code groups and the transmission frame timing of the base station. As shown in Fig. 4, for example, code numbers and correlation values corresponding to slots 1 through 16 are stored in first memory unit 30.

Furthermore, as shown in Fig. 5, the despreader 10 may be composed to have multiplier 11, which multiplies the input signals and codes, adder 12, which adds the output of multiplier 11 and the output of the despreader, and flip-flop circuit 13, which shifts the output of adder 12 by a predetermined amount of time.

In addition, as shown in Fig. 6, the depreader 10 may also be composed to have flip-flop circuits 14₁-14₁₆, which shift input signals by a predetermined amount of time, multipliers 15₁-15₁₇, which respectively multiply the output of each flip-flop circuit 14₁-14₁₆ and the codes, and N tap adder 16, which adds the outputs of multipliers 15₁-15₁₇.

Moreover, although despreader 10₁-10₁₇ are composed by arranging in a row and respectively despreading with the corresponding code, they may also be composed to perform despreading according to a plurality of codes by using in the form of time-sharing.

Next, the following provides an explanation of the operation of the spread spectrum communication apparatus of the present embodiment.

Despreaders 10₁-10₁₇ respectively perform despread processing with predetermined codes 1-17, and calculate the correlation values between the input signals and codes. First selector 20 compares the correlation values output by despreaders 10₁-10₁₇ for each slot, determines the code having the largest correlation value, and outputs that code number and correlation value. As shown in Fig. 4, first memory unit 30 stores the code number and correlation value output by first selector 20 corresponding to the slot. First judgment unit 40 then compares the code sequence stored in first memory unit 30 for a predetermined code group and all frame timings, and infers the most suitable frame timing and code group.

The following provides a more detailed explanation of the operation of the maximum likelihood judgment.

First judgment unit 40 stores the predetermined combinations of frame timings and code groups as candidates. It then compares the code of the candidate code group with the code selected in first selector 20 and stored in first memory unit 30 at the frame timing of each candidate, and totals the correlation values of the slots found to be in agreement. First judgment unit 40 then infers candidate frame timing and code group having the maximum correlation value to be that of the base station transmission.

Thus, since information to be stored in first memory unit 30 is reduced, the required amount of memory capacity becomes smaller. Although it was necessary to store 16 (number of slots of one frame) x 17 (predetermined number of codes) = 272 words in the prior art, assuming that candidate values are expressed with one word, in the present embodiment, this number of words is reduced to 16 (number of slots of one frame) x 2 (code number and correlation value) = 32 words. In addition, since codes can actually be expressed with 5 bits, it is possible to reduce this even further. Accordingly, the spread spectrum communication apparatus becomes more compact and lightweight.

Furthermore, the code numbers and correlation values selected in first selector 20 and stored in first memory unit 30 may consist of a plurality starting with that for which the correlation value is maximum.

### Embodiment 2

Next, a detailed explanation is provided of a second embodiment of the present invention using the drawings.

Fig. 7 is a schematic block diagram showing an example of the constitution of a spread spectrum communication apparatus according to ARIB specifications of a second embodiment that applies the present invention.

Fig. 8 is a memory block diagram showing the data composition inside a second memory unit shown in Fig. 7.

In Fig. 7, despreaders 10₁-10₁₇ of the spread spectrum communication apparatus of this second embodiment are the same as the despreaders of the first embodiment.

The spread spectrum communication apparatus of this second embodiment is composed of despreaders 10₁-10₁₇, a second selector 21 that selects four types of codes for which the correlation values with the input signals are the largest for each slot, and then outputs their code numbers, a second memory unit 31 that stores code numbers input from second selector 21, and a second judgment unit 41 that performs predetermined arithmetic operations based on data stored in second memory unit 31, and performs a maximum likelihood judgment for inferring the most suitable code group among the 32 predetermined types of code groups and the transmission frame timing of the base station.

Next, an explanation is provided regarding the operation of the spread spectrum communication apparatus of the present embodiment.

Despreaders 10₁-10₁₇ respectively perform despread processing with predetermined codes 1-17, and calculate the correlation values between the input signals and codes 1-17. Second selector 21 compares the correlation values output by despreaders inverse diffusers 10₁-10₁₇ for each slot, and outputs those code numbers of the four types of codes ranked from first to fourth in order starting with that having the largest correlation value. As shown in Fig. 8, second memory unit 31 stores the four types of code numbers output by second selector 21 corresponding to the slot. Second judgment unit 41 then weights the codes stored in second memory unit 31 corresponding to their order, compares all frame timings with a predetermined code group, and infers - the most suitable frame timing and code group.

The following provides a more detailed explanation of the operation of the maximum likelihood judgment.

Second judgment unit 41 stores the predetermined combinations of frame timings and code groups as candidates. It then compares the code of the candidate code group with the four types of codes stored in second memory unit 31 at the frame timing of each candidate, and if there is agreement, totals the weighted values predetermined according to the order of the codes for which there is agreement (8 points for first, 4 points for second, 2 points for third and 1 point for fourth). Second judgment unit 41 then infers the candidate frame timing and code group having the maximum total value to be that of the base station transmission.

Thus, since information to be stored in second memory unit 31 is reduced, the required amount of memory capacity becomes smaller. Although it was necessary to store 16 (number of slots of one frame) x 17 (predetermined number of codes) = 272 words in the prior art, assuming that candidate values are expressed with one word, in the present embodiment, this number of words is reduced to 16 (number of slots of one frame) x 4 (top four ranking codes) = 64 words. In addition, since codes can actually be expressed with 5 bits, it is possible to reduce this even further. Accordingly, the spread spectrum communication apparatus becomes more compact and lightweight.

Since the amount of information to be stored in a memory unit is reduced, the required amount of memory capacity becomes smaller. Accordingly, the spread spectrum communication apparatus is both compact in size and light in weight.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A spread spectrum communication apparatus and method reduces the memory capacity required for detecting timing and code sequences. The spread spectrum communication apparatus detects frame timing and a code sequence by using as input signals those signals output from an opposing apparatus that spreads a plurality of slots comprised by time-sharing frames according to spreading codes of spreading sequences. The apparatus includes: a plurality of despreading units that despread the slots of the input signals with predetermined spreading codes and output correlation values; a selection unit that selects at least one spreading code in order, starting with that having the largest correlation value for each slot based on the output of all despreading units, and outputs that spreading code and correlation value; a memory unit that stores the output of the selection unit corresponding to the slots; and, a judgment unit that infers the frame timing and code sequence based on the stored spreading code and correlation value.

## Claims

1. A spread spectrum communication apparatus that detects frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence, and is comprised of:
a plurality of despreading units that despread said slots of said input signals with predetermined spreading codes and outputs correlation values;
a selection unit that selects at least one of said spreading codes in order starting with the largest of said correlation values for each of said slots based on the output of all of said despreading units, and outputs said spreading code and the correlation value corresponding to said spreading code;
a memory unit that stores the output of said selection unit corresponding to said slots; and,
a judgment unit that infers the frame timing and spreading sequence used for transmission based on said spreading code and said correlation value stored in said memory unit.

2. A spread spectrum communication apparatus according to claim 1 wherein said judgment unit respectively compares the spreading code stored in said memory unit and the spreading code corresponding to the code sequence based on all possible frame timings for all said code sequences, determines the sum of said correlation values corresponding to those spreading codes found to be in agreement for each combination of frame timing and spreading sequence, and infers said combination having the largest of said sums to be the frame timing and code sequence used for transmission.

3. A spread spectrum communication apparatus that detects frame timing and a code sequence from input signals,
said input-signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence, and is comprised of:
at least one despreading unit that despreads said slots of said input signals with predetermined spreading codes and outputs correlation values;
a selection unit that selects at least one of said spreading codes in order starting with the largest of said correlation values for each of said slots based on the output of all of said despreading units, and outputs said spreading code;
a memory unit that stores the output of said selection unit corresponding to said slots; and,
a judgment unit that infers the frame timing and spreading sequence used for transmission based on said spreading code stored in said memory unit.

4. A spread spectrum communication apparatus according to claim 3 wherein said judgment unit respectively compares the spreading code stored in said memory unit and the spreading code corresponding to the code sequence based on all possible frame timings for all said code sequences, determines the sum of weighted values corresponding to those spreading codes found to be in agreement for each combination of frame timing and spreading sequence, and infers said combination having the largest of said sums to be the frame timing and code sequence used for transmission.

5. A spread spectrum communication method for detecting frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence; wherein,
correlation values are determined by despreading the signals of all slots with all predetermined spreading codes,
at least one spreading code is selected in order starting with the largest of said correlation values for each slot,
said selected spreading code and said correlation value are respectively stored corresponding to the slots,
said stored spreading code and spreading code corresponding to said code sequence are respectively compared based on all possible frame timings for all code sequences,
the sum of said correlation values corresponding to those spreading codes found to be in agreement is determined corresponding to combinations of frame timing and code sequences, and
said combination for which said sum is the largest is inferred to be the frame timing and code sequence used for transmission.

6. A spread spectrum communication method for detecting frame timing and a code sequence from input signals,
said input signals being output from an apparatus of the opposing side that selects a single code sequence from at least one code sequence having a plurality of spreading codes, and respectively spreads a plurality of slots comprised by time-sharing frames according to spreading codes corresponding to said slots of said code sequence; wherein,
correlation values are determined by despreading the signals of all slots with all predetermined spreading codes,
at least one spreading code is selected in order starting with the largest of said correlation values for each slot,
said selected spreading code is respectively stored corresponding to the slots,
said stored spreading code and spreading code corresponding to said code sequence are respectively compared based on all possible frame timings for all code sequences,
the sum of predetermined weighted values corresponding to the order of those codes found to be in agreement is determined corresponding to combinations of frame timing and code sequences, and
said combination for which said sum is the largest is inferred to be the frame timing and code sequence used for transmission.

7. A spread spectrum communication apparatus that detects frame timing and a code sequence from input signals,
said input signals being output from an apparatus of the opposing side that selects a single code sequence from at least one code sequence having a plurality of spreading codes, and respectively spreads a plurality of slots comprised of time-sharing frames according to spreading codes corresponding to said slots of said code sequence, and is comprised of:
despreading means that despreads said slots of said input signals with predetermined spreading codes, and outputs correlation values;
a selection unit that selects at least one of said spreading codes in order, starting with the largest of said correlation values, for each of said slots based on the output of the despreading means, and outputs said at least one selected spreading code;
a memory unit that stores, for each slot, the at least one selected spreading code; and,
a judgment unit that infers the frame timing and spreading sequence used for transmission based on the thus-selected spreading codes stored in said memory unit.

8. A spread spectrum communication apparatus according to claim 7, wherein said selection unit selects for each slot only one spreading code, that spreading code being the one with the highest correlation value, and outputs that selected spreading code with the corresponding correlation value.

9. A spread spectrum communication apparatus according to claim 7, wherein said selection unit selects for each slot a set of spreading codes having the highest correlation values, and outputs that set of spreading codes.

10. A spread spectrum communication apparatus according to claim 8, wherein said judgment unit respectively compares the spreading code stored in said memory unit and the spreading code corresponding to the code sequence based on all possible frame timings for all said code sequences, determines the sum of the correlation values found to be in agreement for each combination of frame timing and spreading sequence, and infers said combination having the largest of said sums to the frame timing and code sequence used for transmission.

11. A spread spectrum communication apparatus according to claim 9, wherein said judgment unit respectively compares the spreading code stored in said memory unit and the spreading code corresponding to the code sequence based on all possible frame timings for all said code sequences, provides weighting to each spreading code of the set of spreading codes, determines the sum of the thus-weighted spreading codes found to be in agreement for each combination of frame timing and spreading sequence, and infers said combination having the largest of said sums to the frame timing and code sequence used for transmission.
